# EUROPÄISCHE PATENTSCHRIFT

(11) **EP 4 260 136 B1**
(45) Veröffentlichungstag und Bekanntmachung des Hinweises auf die Patenterteilung: **02.07.2025**
(21) Anmeldenummer: 21823181.9
(22) Anmeldetag: 02.12.2021
(51) Int. Cl.: G02F 1/1333, G02F 1/13357, F21V 8/00

(54) **ELEKTROOPTISCHES ANZEIGEMODUL, DAS ZWEI MITEINANDER VERBUNDENE ELEMENTE AUFWEIST**
ELECTRO-OPTICAL DISPLAY MODULE COMPRISING TWO INTERCONNECTED ELEMENTS
MODULE D'AFFICHAGE ÉLECTRO-OPTIQUE À DEUX ÉLÉMENTS INTERCONNECTÉS

(30) Priorität: 08.12.2020 EP 20465594; 14.12.2020 DE 102020215822
(43) Veröffentlichungstag der Anmeldung: 18.10.2023
(73) Patentinhaber: Continental Automotive Technologies GmbH, 30175 Hannover (DE)
(72) Erfinder: CRISAN, Daniel, 60488 Frankfurt am Main (DE); MUNTEAN, Marius-Andrei, 60488 Frankfurt am Main (DE)
(74) Vertreter: Continental Corporation
(86) Internationale Anmeldenummer: PCT/DE2021/200232
(87) Internationale Veröffentlichungsnummer: WO 2022/122094

(56) Entgegenhaltungen:
- EP-A2- 1 956 401
- CN-A- 110 703 481
- JP-A- 2014 178 552
- US-A1- 2018 081 392
- US-A1- 2020 201 107

## Beschreibung

Die vorliegende Erfindung bezieht sich auf ein elektrooptisches Anzeigemodul, das zwei miteinander verbundene Elemente aufweist und eine elektrooptische Anzeigevorrichtung aufweist.

Derartige elektrooptische Anzeigemodule sind beispielsweise durch Anzeigevorrichtungen bekannt, die in Fahrzeugen zum Anzeigen von Informationen für den Fahrer und/oder Insassen des Fahrzeugs verwendet werden. US 2020/201107 A1 betrifft eine Hintergrundbeleuchtung und ein Anzeigegerät, das die Hintergrundbeleuchtung umfasst. JP 2014 178552 A betrifft eine Flüssigkristallanzeigevorrichtung, die mit einer Klebstoffschicht aus einem Klebstoff zur klebenden Befestigung eines Gehäuserahmens und der Rückseite einer Struktur versehen ist. CN 110 703 481 A bezieht sich auf das Gebiet der Anzeigetechnik, insbesondere auf eine Anzeigevorrichtung. EP 1 956 401 A2 betrifft eine Anzeigevorrichtung mit einer Hintergrundbeleuchtungsanordnung. Bekannte elektrooptische Anzeigemodule weisen ein erstes Element, das durch Verbindungselemente mit einem zweiten Element verbunden ist, auf. Diese Verbindungselemente erzeugen eine Kraft an den Elementen, die auf die elektrooptische Anzeigevorrichtung, bei der es sich um eine Flüssigkristallanzeige (LCD) handeln kann, übertragen werden kann. Bekannte Verbindungsvorrichtungen weisen beispielsweise EMV-Dichtungen auf. Diese EMV-Dichtungen erzeugen einen Druck an dem ersten Element und dem zweiten Element und wirken sich auf die Gleichmäßigkeit des Schwarzgrads der Anzeigevorrichtung, wenn LCD-Anzeigevorrichtungen verwendet werden, aus. Diese bekannten EMV-Dichtungen erfordern des Weiteren die Verwendung zusätzlicher Clips und/oder Schrauben vor der Beendigung der Befestigung der Anzeigevorrichtung. Die Aufgabe der vorliegenden Erfindung besteht darin, eine Anzeigevorrichtung bereitzustellen, bei der die Gleichmäßigkeit des Schwarzgrads nicht beeinflusst wird und die Montage des Anzeigemoduls verbessert ist.

Diese Aufgabe wird mit einem elektrooptischen Anzeigemodul mit den Merkmalen von Anspruch 1 und ein Verfahren zur Herstellung einer elektrooptischen Anzeigevorrichtung mit den Merkmalen von Anspruch 15 gelöst. Vorteilhafte Ausführungsformen der Erfindung werden durch die abhängigen Ansprüche beschrieben.

Der Wortlaut: "das erste Element, das die elektrooptische Anzeigevorrichtung trägt" bedeutet, dass die elektrooptische Anzeigevorrichtung direkt mit dem ersten Element oder über ein zusätzliches Element oder mehrere zusätzliche Elemente dazwischen verbunden ist.

Da das erste Element und das zweite Element durch mindestens einen Silikonkörper verbunden sind, erzeugt die Verbindung zwischen dem ersten und dem zweiten Element selbst keine Kraft, die sich auf die elektrooptische Anzeigevorrichtung auswirkt. Weiterhin wird die Montage vereinfacht, da das Silikon durch Ausgabegeräte oder manuell mit einer Silikonpresse ausgegeben werden kann und keine komplexe manuelle Montage, die zu einer fehlerhaften Befestigung führen kann, erforderlich ist. Das erste Element kann beispielsweise eine Grundplatte des elektrooptischen Anzeigemoduls oder ein Rahmen sein, das zweite Element kann beispielsweise die Grundplatte des elektrooptischen Anzeigemoduls oder ein Träger einer Leiterplatte sein.

Wenn das erste Element und das zweite Element aus Metall hergestellt sind, ist das Anzeigemodul sehr stabil und kann für ein gutes Wärmemanagement sorgen, indem es Wärme an eine äußere Umgebung des elektrooptischen Anzeigemoduls ableitet.

Erfindungsgemäß ist der mindestens eine Silikonkörper aus elektrisch leitfähigem Silikon hergestellt. Dadurch kann eine gute und dauerhafte elektrische Verbindung zwischen dem ersten Element und dem zweiten Element erreicht werden. Dies kann für die elektrische Erdung des elektrooptischen Anzeigemoduls nützlich sein.

Wenn das erste Element eine Grundplatte der elektrooptischen Anzeigevorrichtung ist und das zweite Element ein Träger einer Leiterplatte ist, kann eine gute elektrische Verbindung durch das Silikon bereitgestellt werden, wenn ein elektrisch leitfähiges Silikon verwendet wird.

Wenn der Träger und die Grundplatte jeweils einen ersten Sektor aufweisen und diese Sektoren zueinander weisen und einen Zwischenraum zwischen sich bereitstellen, ist dieser Zwischenraum der ideale Ort für die Füllung mit Silikon, insbesondere mit elektrisch leitfähigem Silikon. Dies erfolgt vorzugsweise durch Ausgeben des Silikons auf den ersten Sektor des ersten Elements und/oder Ausgeben des Silikons auf den ersten Sektor des zweiten Elements, bevor das erste und das zweite Element in ihre Endposition zusammengeführt werden.

Wenn die ersten Sektoren eben sind, kann eine gute Form für den Zwischenraum und den resultierenden Silikonkörper erzielt werden.

Wenn die Sektoren parallel zueinander sind, kann der Körper aus dem elektrisch leitfähigen Silikon eine stabile zum Teil elastische Verbindung zwischen dem Rahmen und dem Träger herstellen, und so werden Kräfte zwischen ihnen lediglich in reduzierter Form übertragen, so dass die Auswirkungen auf die elektrooptische Anzeigevorrichtung weiter reduziert werden.

Wenn der Träger und die Grundplatte jeweils einen zweiten Bereich aufweisen und diese Bereiche in direktem mechanischem Kontakt miteinander sind, wird der Zwischenraum zwischen den ersten Sektoren festgelegt und kein weiteres Montagewerkzeug zur Einstellung des richtigen Abstands zwischen den ersten Sektoren ist erforderlich, wenn das Silikon den Abstand zwischen den zu verbindenden Teilen nicht halten kann, bevor das Silikon fest ist.

Wenn das erste Element ein Rahmen ist, der die elektrooptische Anzeigevorrichtung trägt, und das zweite Element eine Grundplatte der elektrooptischen Anzeigevorrichtung ist, können ansonsten erforderliche Gummielemente zwischen dem Rahmen, der die elektrooptische Anzeigevorrichtung trägt, und der Grundplatte durch die Silikonkörper ersetzt werden. Diese Silikonkörper haben zwei Funktionen: gleichzeitiges Verbinden der zwei Elemente und Dämpfen der zwei Elemente.

Eine ideale Form der Grundplatte ist rechteckig, jedoch sind auch andere Formen möglich.

Wenn in jeder der Ecken der Grundplatte ein Silikonkörper, der die Grundplatte mit dem Rahmen verbindet, angeordnet ist, wird eine funktionierende und dauerhafte Verbindung erreicht.

Wenn die Grundplatte einen mit dem Silikon gefüllten Kanal aufweist, kann eine hermetische Abdichtung gegen Schmutz und Feuchtigkeit erzielt werden, wenn der Kanal eine mit dem Silikon gefüllte umlaufende Umführung bildet und der Rahmen den resultierenden Silikonkörper berührt.

Ein Silikonkörper kann darüber hinaus einen Lichtleiter fixieren.

Bei einem Verfahren zur Erzeugung eines elektrooptischen Anzeigemoduls mit den zuvor beschriebenen Merkmalen wird zunächst das Silikon auf das erste Element und/oder das zweite Element ausgegeben und dann werden das erste Element und das zweite Element zusammengebracht, so dass das Silikon das erste Element mit dem zweiten Element verbindet, und dann wird gewartet, bis das Silikon fest ist und den mindestens einen Silikonkörper erzeugt. Der mindestens eine Silikonkörper ist aus elektrisch leitfähigem Silikon hergestellt. Wenn das Silikon ein elektrisch leitfähiges Silikon ist, wird auch eine elektrische Verbindung zwischen dem ersten Element und dem zweiten Element bereitgestellt.

Das elektrisch leitfähige Silikon kann auf die ersten Sektoren des ersten Elements, z. B. die Grundplatte, und/oder die ersten Sektoren des zweiten Elements, z. B. den Träger, ausgegeben werden, dann werden das erste Element und das zweite Element so positioniert, dass die ersten Sektoren des ersten Elements und die ersten Sektoren des zweiten Elements einen Zwischenraum zwischen sich bilden, so dass dieser Zwischenraum mit dem Silikon, z. B. dem elektrisch leitfähigen Silikon, das zuvor auf die ersten Sektoren des ersten Elements und/oder die ersten Sektoren des zweiten Elements ausgegeben wurde, gefüllt wird.

In Abhängigkeit von der Viskosität des Silikons, insbesondere des elektrisch leitfähigen Silikons, und dem Gewicht eines Elements, z. B. des zweiten Elements, das auf das andere Element, z. B. das erste Element, gelegt wird, sind zum Halten der zwei Elemente in einem gewünschten Abstand voneinander keine zusätzlichen Werkzeuge oder zweiten Sektoren erforderlich, wenn die Viskosität des Silikons ausreichend hoch ist, so dass das Silikon nicht vor dem Festwerden weg fließt.

Wenn eine Grundplatte mit einem Rahmen verbunden werden soll, wird das Silikon in einer über den Rand der Grundplatte hinausgehenden Menge auf die Grundplatte ausgegeben. Dann wird der Rahmen auf dem Silikon platziert, so dass das Silikon die Grundplatte mit dem Rahmen verbindet. Ein schmaler Spalt zwischen dem Rahmen und dem Rand der Grundplatte verhindert eine direkte Kraftübertragung von der Grundplatte auf den Rahmen und verbessert dadurch die Gleichmäßigkeit des Schwarzgrads einer an dem Rahmen befestigten elektrooptischen Anzeigevorrichtung.

Wenn der Rahmen zwischen die Ränder der Grundplatte passt, muss das Silikon nicht über den Rand hinausgehen.

Durch Legen des Rahmens auf das auf die Grundplatte ausgegebene Silikon und Drücken des Rahmens in die Richtung der Grundplatte, insbesondere in einer geringfügigen Weise, kann das Silikon um einen Rand eines Lichtleiters gequetscht werden, der in der Grundplatte positioniert ist und sich neben dem ausgegebenen Silikon befindet. So wird auch für die Fixierung dieses Lichtleiters gesorgt.

Das Silikon und insbesondere das elektrisch leitfähige Silikon werden vorzugsweise durch ein Ausgabegerät ausgegeben, es ist jedoch auch möglich, das Silikon manuell, beispielsweise mit einer Silikonpresse oder anderen funktionierenden Werkzeugen, auszugeben. Selbst diese manuelle Ausgabe ist einfacher und weniger problematisch hinsichtlich einer fehlerhaften Montage als die Verwendung von Gummidämpfungselementen, die manuell oder maschinell an dem elektrooptischen Anzeigemodul verbaut werden.

Zur mechanischen Verbindung ist es vorteilhaft, wenn der Träger und der Rahmen jeweils mehrere erste Sektoren aufweisen oder wenn die ersten Sektoren sich jeweils über den Rahmen und den Träger hinweg erstrecken.

Soweit der Träger und die Grundplatte einen zweiten Bereich aufweisen und der jeweilige zweite Bereich der Grundplatte und des Trägers in direktem mechanischem Kontakt miteinander sind, kann eine leichte Montage des Moduls realisiert werden, da keine zusätzlichen Werkzeuge dazu erforderlich sind, die ersten Sektoren des Trägers und des Rahmens in die richtige Position zueinander zu bringen, wenn das elektrisch leitfähige Silikon auf den ersten Sektor oder die ersten Sektoren ausgegeben ist, selbst wenn die Viskosität des Silikons nicht ausreichend hoch ist, um die zwei Teile vor dem Festwerden des Silikons in ihren Positionen zu halten.

Selbst wenn der Träger und die Grundplatte keine zweiten Sektoren aufweisen, wird die Montage des elektrooptischen Anzeigemoduls vereinfacht, indem die Grundplatte in einem ersten Haltewerkzeug befestigt wird und der Träger in einem zweiten Haltewerkzeug befestigt wird und die Grundplatte und der Träger so zueinander positioniert werden, dass jeweilige Zwischenräume zwischen den jeweiligen ersten Sektoren des Rahmens und den jeweiligen ersten Sektoren des Trägers gebildet werden.

Die zweiten Sektoren werden so gewählt, dass, wenn die zweiten Sektoren des Trägers mit den zweiten Sektoren des Rahmens in Kontakt sind, die jeweiligen ersten Sektoren des Trägers zu den jeweiligen ersten Sektoren des Rahmens weisen. Eine optimale Anzahl an zweiten Sektoren für sowohl die Grundplatte als auch den Träger ist drei, da dann eine optimale Position des Trägers und der Grundplatte zueinander realisiert werden kann. Wenn die Anzahl an zweiten Sektoren weniger als drei beträgt, wird möglicherweise ein zusätzliches Einstellungswerkzeug für die richtige Position zwischen dem Rahmen und dem Träger erforderlich, wenn die Anzahl mehr als drei beträgt, kann die Position des Rahmens bezüglich des Trägers überbestimmt sein und aufgrund von Toleranzen sind möglicherweise lediglich drei der zweiten Sektoren des Rahmens in direktem Kontakt mit den jeweiligen zweiten Sektoren des Trägers.

Die Erfindung wird nun unter Zuhilfenahme der Figuren beispielhaft beschrieben.
Fig. 1 zeigt als ein erstes Beispiel die Teilansicht einer Rückseite eines möglichen elektrooptischen Anzeigemoduls gemäß einem Beispiel der Erfindung.
Fig. 2 zeigt den Schnitt A-A von Fig. 1.
Fig. 3 zeigt als ein zweites Beispiel eine Teilansicht auf eine Grundplatte.
Fig. 4 zeigt den Schnitt B-B von Fig. 3.
Fig. 5 zeigt die Ansicht von Fig. 4 zusätzlich mit einem Rahmen und einer Anzeigevorrichtung.

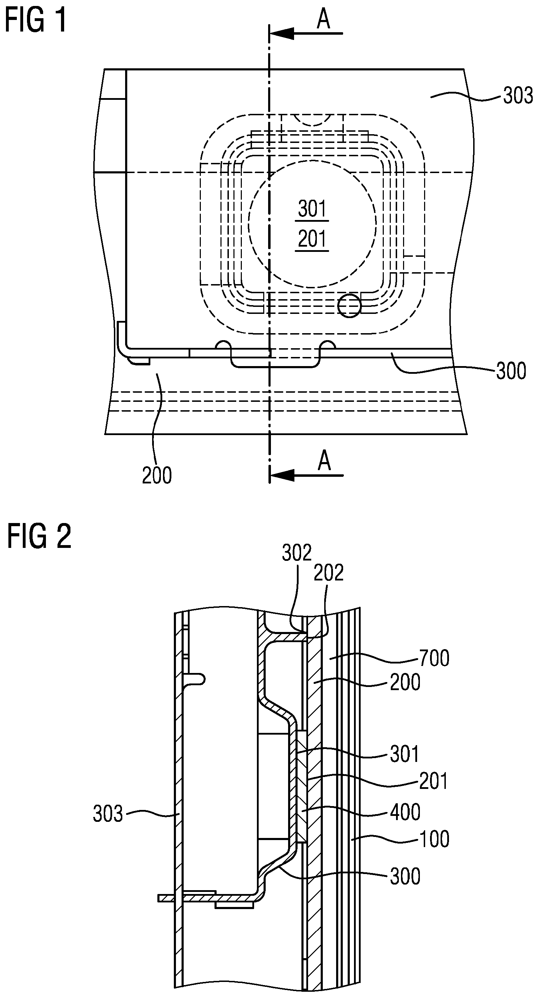

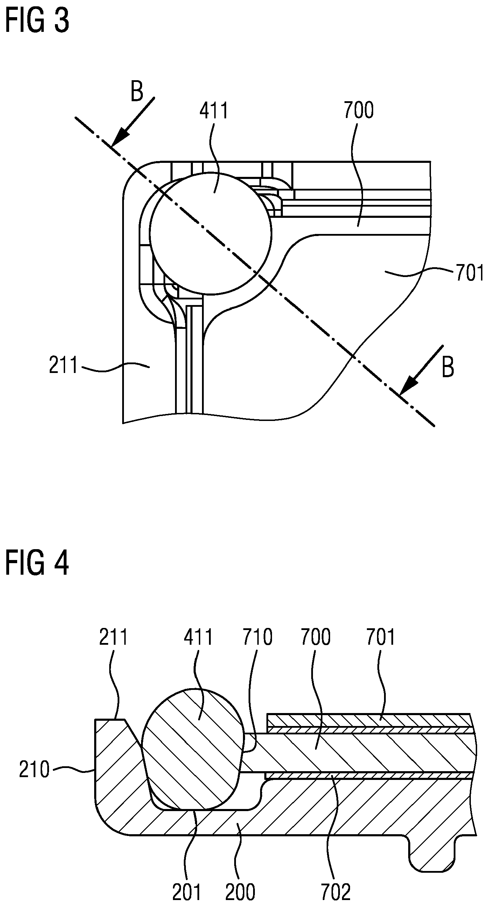

In Fig. 1 sind eine Grundplatte 200 einer elektrooptischen Anzeigevorrichtung 100 und ein Träger 300, der eine Leiterplatte 303 trägt, zu sehen. Der Lichtleiter 700 ist zwischen der Grundplatte 200 der elektrooptischen Anzeigevorrichtung und der elektrooptischen Anzeigevorrichtung 100 angeordnet. Die Grundplatte 200 weist einen ersten Sektor 201 auf, und der Träger 300 weist einen ersten Sektor 301 auf. Die ersten Sektoren 301, 201 des Trägers 300 bzw. der Grundplatte 200 stimmen bezüglich ihrer Positionen überein und sorgen durch den Abstand zueinander für einen Zwischenraum zwischen ihnen. Die Grundplatte 200 kann mit einer elektrooptischen Anzeigevorrichtung 100 verbunden sein und die elektrooptische Anzeigevorrichtung 100 auf die Art und Weise, die später in dem zweiten Beispiel unter Bezugnahme auf Fig. 3-5 beschrieben wird, oder auf irgend eine andere Art und Weise tragen.

In Fig. 2 sind zusätzlich ein zweiter Sektor 202 der Grundplatte 200, ein zweiter Sektor 302 des Trägers 300, ein elektrisch leitfähiger Silikonkörper 400, ein Lichtleiter 700 und eine elektrooptische Anzeigevorrichtung 100 zu sehen. Die ersten Sektoren 201, 301 sind parallel zueinander. Durch die zweiten Sektoren 202, 302 kann der Abstand der ersten Sektoren 201, 301 zueinander vor dem Festwerden des elektrisch leitfähigen Silikons eingestellt werden. Also kann das elektrisch leitfähige Silikon während der Montage des Anzeigemoduls auf einen oder beide der ersten Sektoren 201, 301 ausgegeben werden, bevor der Träger 300 und die Grundplatte 200 in eine Position gemäß der Darstellung in Fig. 1 gebracht werden. Ohne die zweiten Sektoren 202, 302 kann die Position der Grundplatte 200 und des Trägers 300 zueinander durch Werkzeuge, die für die richtigen Positionen dieser zwei Teile sorgen, indem sie sie beispielsweise im richtigen Abstand zueinander halten, angepasst werden. In Abhängigkeit von der Viskosität des Silikons, insbesondere des elektrisch leitfähigen Silikons, und dem Gewicht des Trägers 300, einschließlich der Leiterplatte 303, sind zum Halten der zwei Elemente in einem gewünschten Abstand voneinander keine zusätzlichen Werkzeuge oder zweiten Sektoren 202, 301 erforderlich, wenn die Viskosität des Silikons ausreichend hoch ist, so dass das Silikon nicht vor dem Festwerden weg fließt.

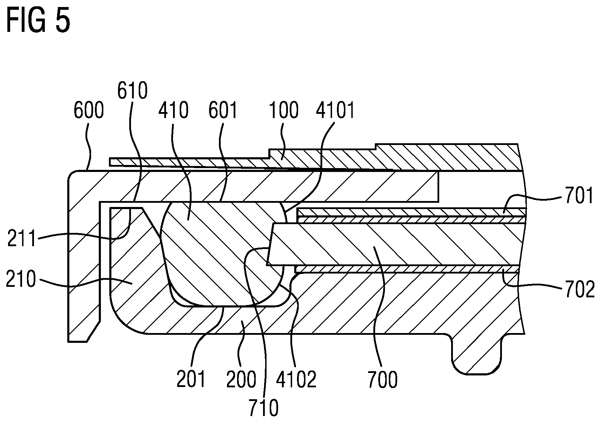

In Fig. 3 werden ein Rand 211 einer ansonsten nicht dargestellten Seitenwand (Nr. 210 in Fig. 4 und 5) und Grundplatte (Nr. 200 in Fig. 4 und 5), Silikon 411, ein Lichtleiter 700 und ein Folienstapel 701 gezeigt.

Das Silikon 411 ist ausgegeben und noch nicht fest.

In Fig. 4 werden zusätzlich zu den Teilen von Fig. 3 die Grundplatte 299 mit einem ersten Sektor 201, einer Seitenwand 210 und dem Rand 211, das Silikon 411, der Lichtleiter 700 mit einem Rand 700, der Folienstapel 701 und eine Reflektorfolie 702 gezeigt. Das Silikon 411 ist auf den zweiten Sektor 201 ausgegeben und geht über den Rand 211 der Seitenwand 210 hinaus. Das Silikon 411 berührt des Weiteren vorzugsweise gemäß der Darstellung die Seitenwand 210 der Grundplatte 200 und den Rand 710 des Lichtleiters 710. Die im vorherigen Satz beschriebenen Merkmale sind nicht zwangsläufig erforderlich, diese Merkmale sind von der tatsächlichen Konstruktion der Grundplatte und des Lichtleiters 700 abhängig.

Fig. 5 zeigt zusätzlich zu den in Fig. 4 gezeigten Teilen einen Rahmen 600 mit einer Unterseite 610, wobei die Unterseite 610 einen ersten Sektor 601 aufweist, eine elektrooptische Anzeigevorrichtung 100 und einen Silikonkörper 410. Die elektrooptische Anzeigevorrichtung 100 ist mit dem Rahmen 600 verbunden.

Der Silikonkörper 410 wird durch Legen der Unterseite 610 des Rahmens 600 auf das Silikon 411 (siehe Fig. 4) und Zusammendrücken des Rahmens 600 und der Grundplatte 200, so dass die Unterseite 610 des Rahmens 600 das Silikon 411 berührt (Fig. 4) erzeugt, und die Form des gezeigten Silikonkörpers 410 wird erzielt. Letztlich wird der Silikonkörper 410 nach dem Festwerden des Silikons 411 erzielt. Der Silikonkörper 410 umgibt mit einem oberseitigen Rand 4101 und einem unterseitigen Rand 4102 den Rand 710 des Lichtleiters 700 und fixiert den Lichtleiter 700 auf diese Art und Weise. Bei Verwendung von weniger Silikon 411 kann nach Wunsch vermieden werden, dass das Silikon 411 den Rand umgibt. Des Weiteren ist der Silikonkörper 410 mit der Seitenwand 210 der Grundplatte 200 verbunden. Auf diese Art und Weise wird die Stabilität der Verbindung zwischen der Grundplatte 200 und dem Rahmen 600 weiter verbessert. Zwischen dem Rand 211 der Seitenwand 210 ist ein Spalt zu sehen. Auf diese Weise werden Verwindungen der Grundplatte 200 in geringerem Maße auf den Rahmen 600 und die elektrooptische Anzeigevorrichtung 100 übertragen als bei direktem Kontakt der Grundplatte 200 und des Rahmens 600.

### Bezugszeichen

100 Anzeigevorrichtung
200 Grundplatte (erstes Element im ersten Beispiel, zweites Element im zweiten Beispiel)
201 Erster Sektor
202 Zweiter Sektor
210 Seitenwand
211 Rand
300 Träger (zweites Element im ersten Beispiel)
301 Erster Sektor
302 Zweiter Sektor
303 Leiterplatte
400 elektrisch leitfähiger Silikonkörper
410 Silikonkörper
411 Silikon
4101 oberseitiger Rand des Silikonkörpers
4102 unterseitiger Rand des Silikonkörpers
600 Befestigungsrahmen (erstes Element im zweiten Beispiel)
601 Erster Sektor
610 Unterseite des Befestigungsrahmens
700 Lichtleiter
701 Folienstapel
702 Reflektorfolie
710 Rand des Lichtleiters

## Patentansprüche

1. Elektrooptisches Anzeigemodul, das eine elektrooptische Anzeigevorrichtung (100), ein erstes Element (200, 600) und ein zweites Element (300, 200) aufweist, wobei das erste Element (200, 600) und das zweite Element (300, 200) miteinander verbunden sind und das erste Element (200, 600) die elektrooptische Anzeigevorrichtung (100) trägt, und das erste Element (200,600) und das zweite Element (300, 600) durch mindestens einen Silikonkörper (410, 400) verbunden sind, wobei der Silikonkörper (410, 400) aus Silikon (411) hergestellt ist, **dadurch gekennzeichnet, dass** der mindestens eine Silikonkörper (400) aus elektrisch leitfähigem Silikon hergestellt ist.

2. Elektrooptisches Anzeigemodul nach Anspruch 1, **dadurch gekennzeichnet, dass** das erste Element (200, 600) und das zweite Element (300, 200) aus Metall hergestellt sind.

3. Elektrooptisches Anzeigemodul nach einem der Ansprüche 1 oder 2, **dadurch gekennzeichnet, dass** das erste Element eine Grundplatte (200) der elektrooptischen Anzeigevorrichtung (100) ist und das zweite Element ein Träger (300) einer Leiterplatte (303) ist.

4. Elektrooptisches Anzeigemodul nach Anspruch 3, **dadurch gekennzeichnet, dass** der Träger (300) und die Grundplatte (200) jeweils einen ersten Sektor (301, 201) aufweisen, wobei die ersten Sektoren (301, 201) des Trägers (300) und der Grundplatte (200) zueinander weisen und einen Zwischenraum zwischen sich bereitstellen, wobei der Zwischenraum mit dem elektrisch leitfähigen Silikon gefüllt wird, wodurch ein elektrisch leitfähiger Silikonkörper (400) gebildet wird.

5. Elektrooptisches Anzeigemodul nach Anspruch 4, **dadurch gekennzeichnet, dass** die ersten Sektoren (301, 201) eben sind.

6. Elektrooptisches Anzeigemodul nach Anspruch 5, **dadurch gekennzeichnet, dass** die ersten Sektoren (301, 201) parallel zueinander sind.

7. Elektrooptisches Anzeigemodul nach Anspruch 4 oder 5, **dadurch gekennzeichnet, dass** der Träger (300) und die Grundplatte (200) jeweils einen zweiten Bereich (302, 202) aufweisen, wobei der zweite Bereich (302) des Trägers (300) und der zweite Bereich (202) der Grundplatte (200) in direktem mechanischem Kontakt miteinander sind.

8. Elektrooptisches Anzeigemodul nach einem der vorhergehenden Ansprüche 1 oder 2, **dadurch gekennzeichnet, dass** das erste Element ein Rahmen (600) ist, der die elektrooptische Anzeigevorrichtung (100) trägt, und das zweite Element eine Grundplatte (200) des elektrooptischen Anzeigemoduls ist.

9. Elektrooptisches Anzeigemodul nach Anspruch 8, **dadurch gekennzeichnet, dass** die Grundplatte (200) eine rechteckige Form aufweist.

10. Elektrooptisches Anzeigemodul nach Anspruch 9, **dadurch gekennzeichnet, dass** in jeder der Ecken der Grundplatte (200) ein Silikonkörper (410), der die Grundplatte (200) mit dem Rahmen (600) verbindet, angeordnet ist.

11. Elektrooptisches Anzeigemodul nach Anspruch 9, **dadurch gekennzeichnet, dass** die Grundplatte (200) einen mit dem Silikon (411) gefüllten Kanal aufweist.

12. Elektrooptisches Anzeigemodul nach Anspruch 11, **dadurch gekennzeichnet, dass** der Kanal eine mit dem Silikon (411) gefüllte umlaufende Umführung bildet.

13. Elektrooptisches Anzeigemodul nach einem der vorhergehenden Ansprüche 8-12, **dadurch gekennzeichnet, dass** der Silikonkörper (410) zusätzlich einen Lichtleiter (700) fixiert.

14. Verfahren zur Herstellung eines elektrooptischen Anzeigemoduls, wobei das elektrooptische Anzeigemodul die Merkmale eines der vorhergehenden Ansprüche aufweist, wobei das Verfahren ferner folgendes vorsieht: Ausgeben des Silikons (411) auf das erste Element (200, 600) und/oder das zweite Element (200, 300) und Zusammenbringen des ersten Elements (200, 600) und des zweiten Elements (200, 300), so dass das Silikon (411) das erste Element mit dem zweiten Element verbindet, und Warten, bis das Silikon fest ist, und so der mindestens eine Silikonkörper (410, 400) gebildet wird, **dadurch gekennzeichnet, dass** der mindestens eine Silikonkörper (400) aus elektrisch leitfähigem Silikon hergestellt ist.

15. Verfahren zur Herstellung eines elektrooptischen Anzeigemoduls nach Anspruch 14, wobei das elektrooptische Anzeigemodul die Merkmale eines der vorhergehenden Ansprüche 4-7 aufweist, **dadurch gekennzeichnet, dass** das Silikon (411) auf die ersten Sektoren (201) der Grundplatte (200) und/oder die ersten Sektoren (301) des Trägers (300) ausgegeben wird, die Grundplatte (200) und der Träger (300) so positioniert werden, dass die ersten Sektoren (201) der Grundplatte (200) und die ersten Sektoren (301) des Trägers (300) einen Zwischenraum zwischen ihnen bilden, so dass der Zwischenraum mit dem elektrisch leitfähigen Silikon (411), das zuvor auf die ersten Sektoren (201) der Grundplatte (200) und/oder die ersten Sektoren (301) des Trägers (300) ausgegeben wurde, gefüllt wird, und gewartet wird, bis das elektrisch leitfähige Silikon (411) fest ist, so dass der elektrisch leitfähige Silikonkörper (400) gebildet wird.

16. Verfahren zur Herstellung eines elektrooptischen Anzeigemoduls nach Anspruch 14, wobei das elektrooptische Anzeigemodul die Merkmale eines der vorhergehenden Ansprüche 8-13 aufweist, **dadurch gekennzeichnet, dass** das Silikon (411) in einer über einen Rand (211) der Seitenwand (210) der Grundplatte (200) hinausgehenden Menge auf die Grundplatte (200) ausgegeben wird und der Rahmen (600) auf dem Silikon (411) platziert wird, so dass das Silikon (411) die Grundplatte (200) mit dem Rahmen (600) verbindet und der Silikonkörper (410) gebildet wird.

17. Verfahren nach Anspruch 16, wobei das elektrooptische Anzeigemodul die Merkmale von Anspruch 13 aufweist, **dadurch gekennzeichnet, dass** das Silikon (411) um einen Rand (710) des Lichtleiters (700) gequetscht wird, indem der Rahmen (600) auf das Silikon (411) platziert wird.

## Claims

1. Electro-optic display module comprising an electro-optic display device (100), a first element (200, 600) and a second element (300, 200), wherein the first element (200, 600) and the second element (300, 200) are connected to each other, and the first element (200, 600) carries the electro-optic display device (100), and the first element (200, 600) and the second element (300, 600) are connected by at least one silicone body (410, 400), wherein the silicone body (410, 400) is made of silicone (411), **characterized in that** the at least one silicone body (400) is made of electrically conductive silicone.

2. Electro-optic display module according to Claim 1, **characterized in that** the first element (200, 600) and the second element (300, 200) are made of metal.

3. Electro-optic display module according to either of Claims 1 and 2, **characterized in that** the first element is a backplate (200) of the electro-optic display device (100), and the second element is a carrier (300) of a printed circuit board (303).

4. Electro-optic display module according to Claim 3, **characterized in that** the carrier (300) and the backplate (200) each have a first sector (301, 201), wherein the first sectors (301, 201) of the carrier (300) and of the backplate (200) face each other and provide an intermediate space between them, wherein the intermediate space is filled with the electrically conductive silicone, whereby an electrically conductive silicone body (400) is formed.

5. Electro-optic display module according to Claim 4, **characterized in that** the first sectors (301, 201) are planar.

6. Electro-optic display module according to Claim 5, **characterized in that** the first sectors (301, 201) are parallel to each other.

7. Electro-optic display module according to Claim 4 or 5, **characterized in that** the carrier (300) and the backplate (200) each have a second section (302, 202), wherein the second section (302) of the carrier (300) and the second section (202) of the backplate (200) are in direct mechanical contact with each other.

8. Electro-optic display module according to either of preceding Claims 1 and 2, **characterized in that** the first element is a frame (600) which carries the electro-optic display device (100), and the second element is a backplate (200) of the electro-optic display module.

9. Electro-optic display module according to Claim 8, **characterized in that** the backplate (200) has a rectangular shape.

10. Electro-optic display module according to Claim 9, **characterized in that** a silicone body (410) which connects the backplate (200) to the frame (600) is arranged in each of the corners of the backplate (200).

11. Electro-optic display module according to Claim 9, **characterized in that** the backplate (200) comprises a channel filled with the silicone (411).

12. Electro-optic display module according to Claim 11, **characterized in that** the channel forms a closed loop filled with the silicone (411).

13. Electro-optic display module according to any of preceding Claims 8-12, **characterized in that** the silicone body (410) additionally fixes a light guide (700).

14. Method for producing an electro-optic display module, wherein the electro-optic display module has the features of any of the preceding claims, wherein the method further provides the following:
dispensing the silicone (411) on the first element (200, 600) and/or the second element (200, 300) and bringing the first element (200, 600) and the second element (200, 300) together so that the silicone (411) connects the first element to the second element, and waiting until the silicone is set such that the at least one silicone body (410, 400) is formed, **characterized in that** the at least one silicone body (400) is made of electrically conductive silicone.

15. Method for producing an electro-optic display module according to Claim 14, wherein the electro-optic display module has the features of any of preceding Claims 4-7, **characterized in that** the silicone (411) is dispensed on the first sectors (201) of the backplate (200) and/or the first sectors (301) of the carrier (300), the backplate (200) and the carrier (300) are positioned such that the first sectors (201) of the backplate (200) and the first sectors (301) of the carrier (300) form an intermediate space between them such that the intermediate space is filled with the electrically conductive silicone (411) which has been previously dispensed on the first sectors (201) of the backplate (200) and/or the first sectors (301) of the carrier (300), and there is a wait for the electrically conductive silicone (411) to set such that the electrically conductive silicone body (400) is formed.

16. Method for producing an electro-optic display module according to Claim 14, wherein the electro-optic display module has the features of any of preceding Claims 8-13, **characterized in that** the silicone (411) is dispensed on the backplate (200) in an amount going beyond a rim (211) of the sidewall (210) of the backplate (200), and the frame (600) is placed on the silicone (411) such that the silicone (411) connects the backplate (200) to the frame (600), and the silicone body (410) is formed.

17. Method according to Claim 16, wherein the electro-optic display module has the features of Claim 13, **characterized in that** the silicone (411) is squeezed around a rim (710) of the light guide (700) by placing the frame (600) on the silicone (411).

## Revendications

1. Module d'affichage électro-optique, comportant un dispositif d'affichage électro-optique (100), un premier élément (200, 600) et un second élément (300, 200), le premier élément (200, 600) et le second élément (300, 200) étant reliés l'un à l'autre et le premier élément (200, 600) portant le dispositif d'affichage électro-optique (100), et le premier élément (200, 600) et le second élément (300, 600) étant reliés par au moins un corps en silicone (410, 400), le corps en silicone (410, 400) étant fabriqué à partir de silicone (411), **caractérisé en ce que** l'au moins un corps en silicone (400) est fabriqué à partir de silicone électriquement conductrice.

2. Module d'affichage électro-optique selon la revendication 1, **caractérisé en ce que** le premier élément (200, 600) et le second élément (300, 200) sont fabriqués en métal.

3. Module d'affichage électro-optique selon l'une quelconque des revendications 1 ou 2, **caractérisé en ce que** le premier élément est une plaque de base (200) du dispositif d'affichage électro-optique (100) et le second élément est un support (300) d'une carte de circuit imprimé (303).

4. Module d'affichage électro-optique selon la revendication 3, **caractérisé en ce que** le support (300) et la plaque de base (200) présentent respectivement un premier secteur (301, 201), dans lequel les premiers secteurs (301, 201) du support (300) et de la plaque de base (200) se font face et ménagent un espace entre eux, l'espace étant rempli de la silicone électriquement conductrice, formant ainsi un corps en silicone électriquement conducteur (400).

5. Module d'affichage électro-optique selon la revendication 4, **caractérisé en ce que** les premiers secteurs (301, 201) sont plans.

6. Module d'affichage électro-optique selon la revendication 5, **caractérisé en ce que** les premiers secteurs (301, 201) sont parallèles l'un à l'autre.

7. Module d'affichage électro-optique selon la revendication 4 ou 5, **caractérisé en ce que** le support (300) et la plaque de base (200) présentent respectivement une seconde zone (302, 202), dans lequel la seconde zone (302) du support (300) et la seconde zone (202) de la plaque de base (200) sont en contact mécanique direct l'une avec l'autre.

8. Module d'affichage électro-optique selon l'une quelconque des revendications 1 ou 2, **caractérisé en ce que** le premier élément est un cadre (600) qui porte le dispositif d'affichage électro-optique (100), et le second élément est une plaque de base (200) du module d'affichage électro-optique.

9. Module d'affichage électro-optique selon la revendication 8, **caractérisé en ce que** la plaque de base (200) présente une forme rectangulaire.

10. Module d'affichage électro-optique selon la revendication 9, **caractérisé en ce que**, dans chacun des coins de la plaque de base (200) est disposé un corps en silicone (410) qui relie la plaque de base (200) au cadre (600).

11. Module d'affichage électro-optique selon la revendication 9, **caractérisé en ce que** la plaque de base (200) comporte un canal rempli de silicone (411).

12. Module d'affichage électro-optique selon la revendication 11, **caractérisé en ce que** le canal forme une dérivation périphérique remplie de silicone (411).

13. Module d'affichage électro-optique selon l'une quelconque des revendications 8-12, **caractérisé en ce que** le corps en silicone (410) fixe en outre un guide de lumière (700).

14. Procédé de fabrication d'un module d'affichage électro-optique, dans lequel le module d'affichage électro-optique présente les caractéristiques de l'une quelconque des revendications précédentes, le procédé consistant en outre à : décharger la silicone (411) sur le premier élément (200, 600) et/ou le second élément (200, 300) et rapprocher le premier élément (200, 600) et le second élément (200, 300) de telle sorte que la silicone (411) relie le premier élément au second élément, et attendre que la silicone durcisse, formant ainsi l'au moins un corps en silicone (410, 400), **caractérisé en ce que** l'au moins un corps en silicone (400) est fabriqué à partir de silicone électriquement conductrice.

15. Procédé de fabrication d'un module d'affichage électro-optique selon la revendication 14, dans lequel le module d'affichage électro-optique présente les caractéristiques de l'une quelconque des revendications 4-7, **caractérisé en ce que** la silicone (411) est déchargée sur les premiers secteurs (201) de la plaque de base (200) et/ou les premiers secteurs (301) du support (300), **en ce que** la plaque de base (200) et le support (300) sont positionnés de telle sorte que les premiers secteurs (201) de la plaque de base (200) et les premiers secteurs (301) du support (300) forment un espace entre eux, de telle sorte que l'espace est rempli de la silicone électriquement conductrice (411) qui a été déchargée précédemment sur les premiers secteurs (201) de la plaque de base (200) et/ou les premiers secteurs (301) du support (300), et **en ce qu'**on attend que la silicone électriquement conductrice (411) durcisse, de telle sorte que le corps en silicone électriquement conducteur (400) est formé.

16. Procédé de fabrication d'un module d'affichage électro-optique selon la revendication 14, dans lequel le module d'affichage électro-optique présente les caractéristiques de l'une quelconque des revendications 8-13, **caractérisé en ce que** la silicone (411) est déchargée sur la plaque de base (200) en une quantité dépassant d'un bord (211) de la paroi latérale (210) de la plaque de base (200) et **en ce que** le cadre (600) est placé sur la silicone (411), de telle sorte que la silicone (411) relie la plaque de base (200) au cadre (600) et que le corps en silicone (410) est formé.

17. Procédé selon la revendication 16, dans lequel le module d'affichage électro-optique présente les caractéristiques de la revendication 13, **caractérisé en ce que** la silicone (411) est comprimée autour d'un bord (710) du guide de lumière (700) en plaçant le cadre (600) sur la silicone (411).
